# EUROPÄISCHE PATENTSCHRIFT

(11) **EP 1 236 557 B1**
(45) Veröffentlichungstag und Bekanntmachung des Hinweises auf die Patenterteilung: **26.04.2006**
(21) Anmeldenummer: 02003121.7
(22) Anmeldetag: 13.02.2002
(51) Int. Cl.: B29C 45/17

(54) **Wärmedämmeinrichtung für ein beheiztes Spritz-/Schäumwerkzeug**
Thermal insulation for heated injection- or foaming mould
Insulation thermique pour moule chauffé pour moulage par injection ou moussage

(30) Priorität: 17.02.2001 DE 20102855 U
(43) Veröffentlichungstag der Anmeldung: 04.09.2002
(73) Patentinhaber: BBG GmbH & Co. KG, 87719 Mindelheim (DE)
(72) Erfinder: Hagenmeyer, Cord, 87719 Mindelheim (DE)
(74) Vertreter: Fiener, Josef

(56) Entgegenhaltungen:
- EP-A- 0 879 692
- US-A- 4 915 608
- PATENT ABSTRACTS OF JAPAN vol. 017, no. 455 (M-1466), 20. August 1993 (1993-08-20) & JP 05 104595 A (MATSUSHITA ELECTRIC WORKS LTD), 27. April 1993 (1993-04-27)
- PATENT ABSTRACTS OF JAPAN vol. 011, no. 280 (E-539), 10. September 1987 (1987-09-10) & JP 62 079633 A (MITSUBISHI ELECTRIC CORP), 13. April 1987 (1987-04-13)
- BEITZ, KÜTTNER: "Dubbel / Taschenbuch für den Maschinenbau" 1981 , SPRINGER VERLAG , BERLIN, HEIDELBERG XP002198933 * Seite 1375; Abbildung 2 *
- "Heat Exchanger Design Handbook, Volume 5: Physical Properties" 1987 , HEMISPHERE PUBLISHING CORPORATION , USA XP002198934 * Seite 5.5.12-1 - Seite 5.5.12-7 *

## Beschreibung

Die Erfindung betrifft eine Wärmedämmeinrichtung für ein beheiztes Spritz-/Schäumwerkzeug, in dem Bauteile insbesondere mit einem Kunststoff-Rahmen, umspritzbar/umschäumbar sind und das Spritz-/Schäumwerkzeug mit einer Aufspannplatte in einem Formenträger oder einer Presse fixierbar ist.

Verbundbauteile in Form von kunststoffumspritzten Glastafeln für Schiebedächer, Heck-, Front- oder Seitenscheiben oder ähnliche Bauteile werden in der Kraftfahrzeugtechnik zunehmend eingesetzt. Der die Glastafel umgebende Kunststoff-Rahmen aus einem Thermoplast-Kunststoff oder Polyurethanschaum dient dabei auch zur Verankerung von Halterungsteilen, beispielsweise Blechlaschen, an denen Gelenkpunkte oder Antriebsmechanismen für die Öffnung des Glasschiebedaches angelenkt sind, so daß hierbei hohe Anforderungen an die Fertigungsgenauigkeit bestehen. Dies erfordert ein sehr genaues Schäum- oder Umspritzwerkzeug und eine präzise Positionierung des Bauteils innerhalb des Werkzeuges. Die bei der Fertigung eingesetzte Wärmedämmeinrichtung bei beheizten Umspritz- bzw. Umschäumwerkzeugen soll dabei den Energieaufwand für die Beheizung reduzieren.

Bei bisherigen Herstellungsverfahren mit einem Umschäumwerkzeug wird meist für die Wärmedämmung zwischen beheizten Werkzeugen und den Aufspannplatten eine isolierende Kunststoffplatte eingesetzt. Bei der JP 05/104 595 werden hierzu Abstandsblöcke mit Heizvorrichtung verwendet. Um die Mindesteinbauhöhen von Formenträgern oder Pressen zu überbrücken, muß dann auf die Kunststoffplatte noch eine Stahlkonstruktion als Unterbau gesetzt werden. Dies stellt eine relativ aufwendige und schwere Konstruktion aus verschiedenen Materialien dar. Aufgrund der hohen Masse wird die Formöffnungszeit relativ groß, so daß dann die Taktrate sinkt. Zudem wird eine sehr intensive wärmeabwanderung vom Werkzeug zur Aufspannplatte hin in Kauf genommen. Hierdurch wird jedoch die Maßgenauigkeit oft unzureichend, so daß am hergestellten Kunststoff-Rahmen ein hohes Maß an Nacharbeit erforderlich ist. In derartigen Werkzeugen ist zudem der Energieaufwand für die Beheizung beträchtlich.

Demzufolge liegt der Erfindung die Aufgabe zugrunde, eine einfach aufgebaute Wärmedämmeinrichtung für beheizbare Spritz-/Schäumwerkzeuge zu schaffen, die die vorstehenden Nachteile vermeidet, insbesondere den Energieaufwand reduziert und eine hohe Genauigkeit selbst bei hoher Taktrate bietet.

Diese Aufgabe wird gelöst durch eine Wärmedämmeinrichtung gemäß den Merkmalen des Patentanspruches 1.

Durch die vorgeschlagene Wärmedämmeinrichtung können die Energiekosten wesentlich reduziert werden. Durch die Verwendung von wärmedämmenden Stahlsäulen mit einem Chromgehalt von größer als 10% zwischen Werkzeug und Aufspannplatte wird sowohl die Wärmeableitung gesenkt als auch die Mindesteinbauhöhe vom Formenträger oder der Presse überbrückt. Wärmedämmung und der Stahlkonstruktions-Unterbau sind somit in Form der Stahlsäulen zusammengefaßt. Der noch verbleibende Wärmestrahlungsverlust wird dabei wegen der geringen Wärmeleitfähigkeit des Chromstahls (bevorzugt X42 Cr13) relativ gering.

Zudem kann bei dieser Bauweise durch Verringerung der bewegten Masse der Schließvorgang des Werkzeugs beschleunigt werden. Weiterhin ergibt sich eine exakte parallele Ausrichtung zur Aufspannplatte hin und dadurch eine exakte Führung ohne Klemmgefahr in dem Formenträger oder der Presse. Dadurch kann das Kunststoff-Bauteil bzw. -Werkstück im Spritz-/Schäumwerkzeug in einfacher und exakter Weise hergestellt werden. Dabei ist die Wärmedämmeinrichtung im wesentlichen in das Schäumwerkzeug integriert und sehr einfach aufgebaut.

Weiterhin wird durch die weitgehend konstanten Temperaturbedingungen die Reproduzierbarkeit erhöht, so daß die Qualität des Fertigbauteils insgesamt steigt. Insbesondere wird auch sichergestellt, daß z.B. Halterungspunkte eines Glasschiebedaches exakt eingehalten werden. Hierdurch wird der Aufwand für eine Nachbearbeitung erheblich reduziert und insbesondere eine exakte Relativ-Zuordnung erzielt, so daß bei dem bevorzugten Anwendungsbeispiel eines Glasschiebedaches eine gleichmäßige Qualität erreicht wird. Weitere vorteilhafte Ausgestaltungen der Wärmedämmeinrichtung sind Gegenstand der abhängigen Ansprüche.

Nachfolgend wird ein Ausführungsbeispiel der Erfindung anhand der Zeichnungen näher erläutert und beschrieben. Hierin zeigt:

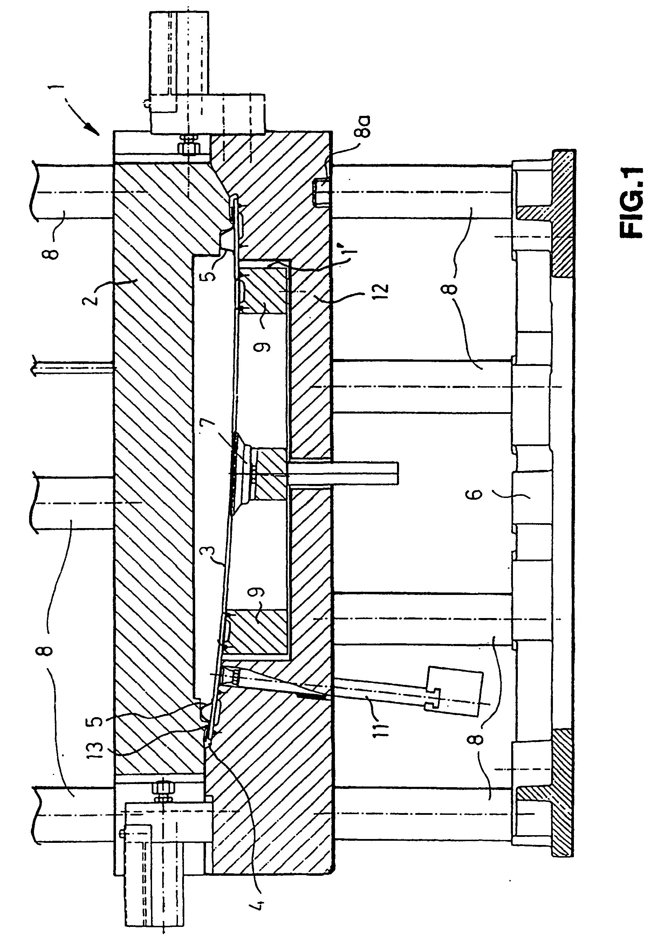

- Fig. 1: ein Schäumwerkzeug mit eingelegtem Bauteil bei der Herstellung im Schäumwerkzeug mit einer neuerungsgemäßen Wärmedämmeinrichtung;

In Fig. 1 ist als Anwendungsbeispiel eine Glastafel (als repräsentatives Beispiel eines Bauteils 3 in einem Schäumwerkzeug 1 eingelegt gezeigt. Dabei wird die Glastafel 3 am Außenrand bzw. den Seitenkanten von einem Kunststoff-Rahmen 4 (hier als Formhohlraum dargestellt) bevorzugt aus PU-Schaummaterial umgeben. Dieser Rahmen 4 wird in dem Schäumwerkzeug 1 mit einem Oberteil 2 und einem Unterteil 12 an dem Außenrand der Glastafel 3 umspritzt bzw. umschäumt. Hierbei werden auch mehrere Halterungsteile 5, bevorzugt hier nach oben abstehende Winkelbleche mitumspritzt, so daß durch Einsetzen von nicht dargestellten Schrauben, Bolzen u. dgl. eine Befestigung an einem Schwenkgelenk oder dem Antriebsmechanismus ermöglicht wird.

Das Schäumwerkzeug 1 mit Werkzeug-Oberteil 2 und Werkzeug-Unterteil 12 kann gegenüber der hier dargestellten Lage mit konkav eingelegter Glastafel 3 auch um 180° ("Überkopf") gedreht werden, so daß das Bauteil 3 dann konvex positioniert wäre. Die Fixierung der Glastafel 3 relativ zum Formhohlraum zur Ausbildung des Rahmens 4 und zu den Halterungsteilen 5 erfolgt zu deren Umspritzung/Umschäumung mit einer Vakuumsaugvorrichtung 7 mit leistenartigen Auflagen 9 und einem davon umgrenzten Vakuumnest 1' mit Absauganschluß. Dabei ist der Formhohlraum mit einer selbsttrennenden Dichtung 13, die einen Austritt des über eine oder bevorzugt mehrere Einspritzöffnung(-en) eintretenden Kunststoffschaumes an die Oberseite der Glastafel 3 verhindert, abgedichtet. Auch zum Unterteil 12 hin sind derartige Dichtungen 13 vorgesehen, so daß Ober- und Unterseite der Glastafel 3 beim Schäumvorgang sauber gehalten werden.

Es sei darauf hingewiesen, das diese an sich bekannte Vakuumsaugvorrichtung 7 auch alternativ im Werkzeug-Oberteil 2 verwendet werden kann. Bei diesem Aufbau einer Produktionsanlage genügt zur Entnahme des fertiggestellten Glasschiebedaches mit dem Rahmen 4 ein einfaches Anheben des Werkzeug-Oberteils 2 bzw. ein Absenken des Werkzeug-Unterteils 12, das über Stahlsäulen 8 auf einer Aufspannplatte 6 abgestützt ist. Auch das Oberteil 2 ist über ähnliche Stahlsäulen 8 an einer nicht dargestellten (oberen) Aufspannplatte 6 befestigt, um in einem Formenträger bzw. einer üblichen Presse fixiert zu werden.

Die so positionierte Glastafel 3 wird in dem beheizten Schäumwerkzeug 1 umschäumt und dann ausgeformt, wozu ein hier nur schematisch angedeuteter Auswerfer 11 verwendet wird, der an der Unterseite der Glastafel 3 in Nähe des Rahmens 4 angreift.

Es sei darauf hingewiesen, daß hierbei die Stahlsäulen 8 als Wärmedämmeinrichtung 7 verwendet werden, da diese aus einem relativ zu Normalstahl wärmedämmenden Stahl, insbesondere einem Chromstahl bestehen. Durch den für martensitische oder ferritische Chromstähle typischen Chromgehalt von mehr als 10 % i.a. 12-15 % ergibt sich wegen der relativ geringen Wärmeleitfähigkeit von Chrom (0,07 KJ/m•s•K) eine relativ hohe Wärmedämmung im Schäumwerkzeug 1. Durch diese Wärmedämm-Stahlsäulen 7 wird somit gegenüber üblichem Stahl die Wärmeableitung aus dem beheizten Schäumwerkzeug 1 gering gehalten, da die Wärmeleitzahl von Chromstahl aufgrund der Gitterstruktur ca. 6 mal geringer als von Schmiedestahl (bzw. -eisen) ist.

Durch diese Wärmedämmeinrichtung mit wärmedämmenden Stahlsäulen 8 zwischen Werkzeug 1 und Aufspannplatte 6 ergibt sich somit eine erhebliche Reduzierung des Energieaufwandes, so daß insgesamt eine exakte und kostengünstige Wärmedämmnung geschaffen wird. Hierdurch wird auch der Kestenaufwand bei der Herstellung erheblich verbessert.

## Patentansprüche

1. Wärmedämmeinrichtung für ein beheiztes Spritz-/Schäumwerkzeug (1), in dem Bauteile (3), insbesondere mit einem Kunststoff-Rahmen (4), umspritzbar/umschäumbar sind und das Spritz-/Schäumwerkzeug (1) mit einer Aufspannplatte (6) in einem Formenträger oder einer Presse fixierbar ist,
**dadurch gekennzeichnet, daß**
zwischen dem Spritz-/Schäumwerkzeug (1) und der Aufspannplatte (6) wärmedämmende Stahlsäulen (8) angeordnet sind, deren Chromgehalt größer als 10% ist.

2. Wärmedämmeinrichtung nach Anspruch 1,
**dadurch gekennzeichnet, daß**
mehrere Stahlsäulen (8) in gleichmäßigem Abstand angeordnet sind.

3. Wärmedämmeinrichtung nach Ansprüch 1 oder 2,
**dadurch gekennzeichnet, daß**
die Stahlsäulen (8) endseitig je ein Gewinde (8a) zum Verschrauben mit dem Spritz-/Schäumwerkzeug (1) und der Aufspannplatte (6) aufweisen.

4. Wärmedämmeinrichtung nach einem der Ansprüche 1 bis 3,
**dadurch gekennzeichnet, daß**
die Stahlsäulen (8) am Werkzeug-Unterteil (12) und Werkzeug-Oberteil (2) des Spritz-/Schäumwerkzeuges (1) gleich hoch ausgebildet sind.

5. Wärmedämmeinrichtung nach einem der Ansprüche 1 bis 4,
**dadurch gekennzeichnet, daß**
die Stahlsäulen (8) je eines Spritz-/Schäumwerkzeuges (1) im wesentlichen den gleichen Durchmesser aufweisen.

## Claims

1. A thermal insulation means for a heated injection/foaming mould (1), in which components (3), in particular with a plastic frame (4), can be coated by injection/foaming, and the injection/foaming mould (1) is designed to be fixed within a mould support or a power press by means of a clamping plate (6),
**characterized in that**
thermally insulating steel columns (8) having a chromium content of more than 10 % are disposed between the injection/foaming mould (1) and the clamping plate (6).

2. The thermal insulation means of claim 1, **characterized in that** a number of steel columns (8) are uniformly spaced from each other.

3. The thermal insulation means of claim 1 or 2, **characterized in that** the steel columns (8) each have threads (8a) formed at the ends thereof to be screwed with the injection/foaming mould (1) and the clamping plate (6).

4. The thermal insulation means of any of claims 1 to 3, **characterized in that** the steel columns (8) at the tool bottom (12) and the tool top (2) of the injection/foaming mould (1) are of the same height.

5. The thermal insulation means of any of claims 1 to 4, **characterized in that** the steel columns (8) belonging to one injection/foaming mould (1) have substantially identical diameters.

## Revendications

1. Dispositif d'isolation thermique pour un outil de moulage par injection / moussage (1) chauffé, dans lequel des composants (3), en particulier avec un cadre en plastique (4), peuvent être surmoulés/revêtus de mousse et l'outil de moulage par injection / moussage (1) peut être fixé avec un plateau de fixation (6) dans un porte-moule ou une presse,
**caractérisé par le fait**
**que** des colonnes en acier (8) isolantes dont la teneur en chrome est supérieure à 10 % sont disposées entre l'outil de moulage par injection / moussage (1) et le plateau de fixation (6).

2. Dispositif d'isolation thermique selon la revendication 1,
**caractérisé par le fait**
**que** plusieurs colonnes en acier (8) sont disposées à intervalle régulier.

3. Dispositif d'isolation thermique selon 1a revendication 1 ou 2,
**caractérisé par le fait**
**que** les colonnes en acier (8) présentent à chaque extrémité un filetage 8a pour être vissées avec l'outil de moulage par injection / moussage (1) et le plateau de fixation (6).

4. Dispositif d'isolation thermique selon l'une des revendications 1 à 3,
**caractérisé par le fait**
**que** les colonnes en acier (8) sont de même hauteur sur la partie inférieure d'outil (12) et la partie supérieure d'outil (13) de l'outil de moulage par injection / moussage (1).

5. Dispositif d'isolation thermique selon l'une des revendications 1 à 4,
**caractérisé par le fait**
**que** les colonnes en acier (8) de chaque outil de moulage par injection / moussage (1) présentent essentiellement le même diamètre.
